# DEMANDE DE BREVET EUROPEEN

(11) **EP 0 814 529 A1**
(43) Date de publication de la demande: **29.12.1997**
(21) Numéro de dépôt: 97201745.3
(22) Date de dépôt: 09.06.1997
(51) Int. Cl.: H01M 10/04, H01M 2/02, H01M 2/10

(54) **Carte mince comprenant un accumulateur plat et des contacts**

(30) Priorité: 19.06.1996 FR 9607633
(71) Demandeur: PHILIPS ELECTRONICS N.V., 5621 BA Eindhoven (NL)
(72) Inventeur: Van Lerberghe, Steven, 75008 Paris (FR)
(74) Mandataire: Lottin, Claudine

(57) **Abrégé**

Carte mince incluant un accumulateur électrique plat et des moyens de contact (2,4) comprenant une première et une seconde feuilles (1,8) de recouvrement, un cadre intercalaire (9) attaché de façon étanche auxdites feuilles de recouvrement à leur périphérie, ledit cadre ayant un évidement central (9A), et un élément accumulateur plat (100,200) disposé dans l'évidement central du cadre, ayant des électrodes de polarités opposées. Dans cette carte mince, la première et la seconde feuilles (1,8) de recouvrement sont en matériau plastique isolant, le cadre intercalaire (9) comprend des parties (2A,2B ; 4A,4B) en matériau conducteur respectivement connectées aux électrodes (26,28) de polarités opposées, et respectivement isolées entre elles par des parties (3A, 3B ; 5A, 5B) dudit cadre intercalaire en matériau isolant auxquelles elles sont scellées. Par exemple, l'élément accumulateur plat est du type plomb-acide rechargeable.
Application : Batteries pour appareils sans fil

## Description

La présente invention concerne une carte mince comprenant un accumulateur électrique plat et des moyens de contact.

L'invention trouve son application dans l'industrie de fabrication des appareils portables et particulièrement dans l'industrie de fabrication des terminaux téléphoniques.

Une carte mince flexible incluant un élément accumulateur électrique est déjà connue de la demande de brevet japonais JP 60-7056, n° 58-114925 du 25-06-1983 publiée le 14-01-1985 (TOMOYUKI AOKI). Cette carte comprend une première et une seconde feuilles flexibles planes rectangulaires de recouvrement inférieur et supérieur d'un accumulateur plan. Ces feuilles sont mises en place face à face et scellées à l'autre par un joint en un matériau de scellement disposé de manière intercalaire et périphérique. L'accumulateur est disposé dans l'évidement créé par ce joint de scellement, et comprend une première et une seconde électrodes sous forme de feuilles conductrices dont l'une est prolongée et forme une patte externe de contact pincée entre le joint de scellement et la première feuille de recouvrement à une extrémité du rectangle, et l'autre est prolongée et forme une autre patte externe de contact pincée entre le joint de scellement et la seconde feuille de recouvrement. L'opération de scellement au moyen du joint est réalisée par collage ou par fusion sous rayonnements ultra-violets ou dans un champ électrique haute fréquence qui élimine les particules étrangères pouvant autrement rendre le scellement non étanche.

Un problème technique réside maintenant dans le fait que la demande de l'industrie est pour une telle carte mince, incluant un accumulateur électrique, ayant des propriétés de rigidités augmentées pour une mise en place plus aisée dans un appareil sans fil, et disposant de zones de contact électrique franc.

Ce problème est résolu par une carte mince, incluant un accumulateur électrique plat et des moyens de contact, comprenant :
une première et une seconde feuilles de recouvrement,
un cadre intercalaire scellé auxdites feuilles de recouvrement à leur périphérie, ledit cadre ayant un évidement central,
un élément accumulateur plat disposé dans l'évidement central du cadre, ayant des électrodes de polarités opposées, carte mince dans laquelle :
la première et la seconde feuille de recouvrement sont en matériau plastique isolant,
le cadre intercalaire comprend des parties en matériau conducteur respectivement scellées aux électrodes de polarité opposées, et respectivement isolées entre elles par des parties dudit cadre intercalaire en matériau isolant auxquelles elles sont scellées.

Les parties métalliques du cadre intercalaire forment des contacts électriques qui sont des collecteurs de courant de cathode et d'anode de l'accumulateur de faible résistance électrique et de bonne résistance mécanique permettant une connexion électrique franche.

Cette carte mince présente l'avantage d'être rigidifiée par la présence des parties en matériau métallique du cadre intercalaire. La carte mince est de ce fait facilement insérable dans un appareil sans fil où sa quasi rigidité permet de la mettre en place par glissement et de l'y maintenir facilement.

Des figures schématiques illustrant la description sont décrites succinctement ci-après :
La FIG.1A représente en vue plane une partie de la carte mince ;
La FIG.1B représente une coupe selon un axe AA de la FIG.1A ;
La FIG.1C représente une coupe selon un axe BB de la FIG.1A ;
La FIG.1D représente une coupe d'une autre partie d'une carte mince ;
La FIG.2A représente une vue éclatée d'un élément électrochimique ;
La FIG.2B représente une vue éclatée d'un autre élément électrochimique ;
La FIG.3A représente en coupe un élément électrochimique de la FIG.2A monté dans un premier type de carte mince ;
La FIG.3B représente en coupe un tel élément monté dans un deuxième type de carte mince ;
La FIG.3C représente en coupe un montage pour associer plusieurs éléments électrochimiques en série, formant un troisième type de carte mince ;
La FIG.3D représente en coupe un mode de réalisation d'ouverture dans des feuilles intermédiaires de recouvrement pour connecter des structures de cartes minces en série ;
La FIG.4 représente en coupe une rainure de sécurité anti-explosion pratiquée dans une feuille de recouvrement.

Une carte mince est décrite ci-après illustrée par ces figures annexées.

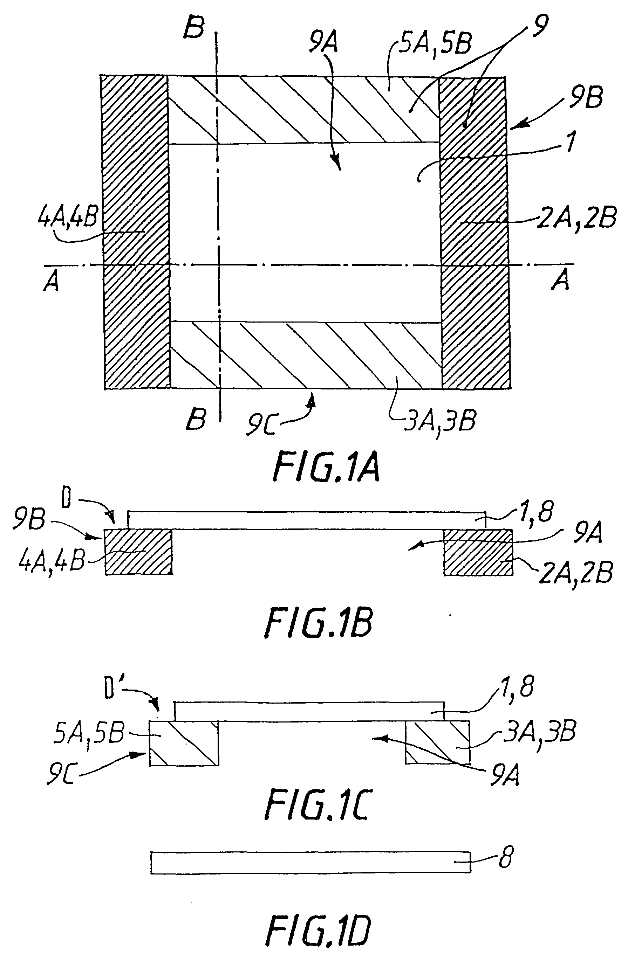

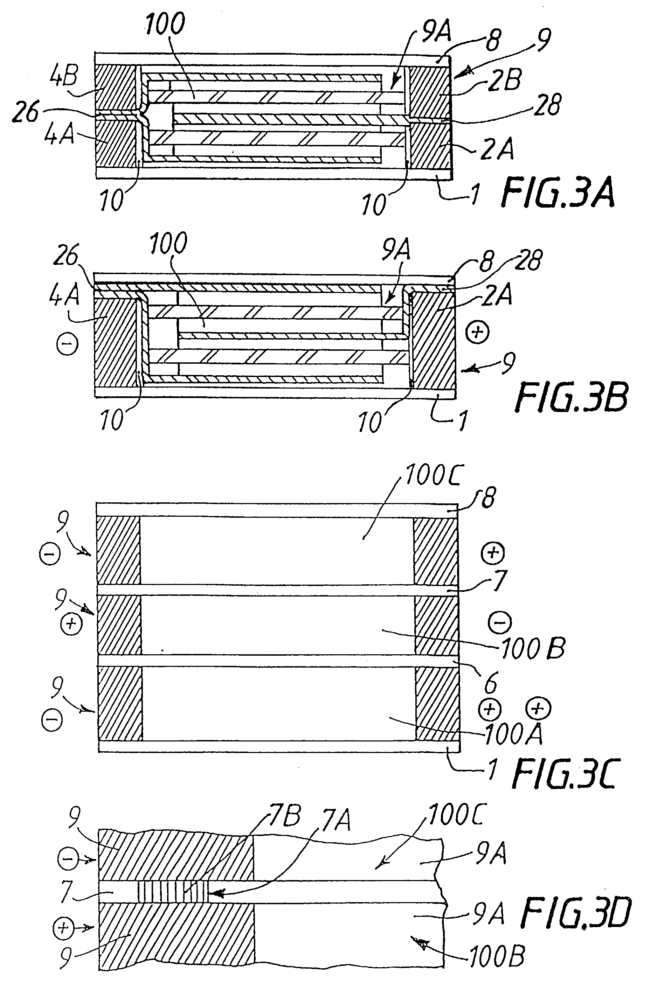

En référence à la FIG.1, et aux FIG.3A, 3B, une carte mince incluant au moins un élément électrochimique comprend :
une première feuille de recouvrement 1 appelée paroi plane inférieure ;
une seconde feuille de recouvrement 8, appelée paroi plane supérieure ;
un cadre intercalaire 9 attaché de façon étanche auxdites parois planes inférieure et supérieure, disposé à leur périphérie interne, ce cadre ayant un évidement interne 9A ;
un élément accumulateur plat 100 disposé dans l'évidement central 9A du cadre intercalaire 9 dont les dimensions sont appropriées pour l'accueillir, cet élément accumulateur 100 étant constitué par une cellule électrochimique ayant des électrodes 26 et 28 de polarités opposées.

La première et la seconde parois planes sont en un matériau isolant semi-rigide qui peut être un polychlorure de vinyle (PVC), ou un acrylonytrile-butadiène-styrène (ABS) sous forme de multicouches moulées ou laminées. Le matériau de réalisation de ces première et seconde parois planes doit montrer plusieurs qualités. Il doit pouvoir être attaché de façon étanche à des matériaux métalliques ou à d'autres matériaux plastiques. Il doit être inerte au produit constituant l'élément accumulateur. Il doit être étanche au produit constituant cet élément accumulateur et en outre étanche aux produits de l'environnement.

Le cadre intercalaire 9 comprend des parties en matériau conducteur 2A, 2B et 4A, 4B respectivement connectées aux électrodes 26 et 28 de l'élément accumulateur.

En référence aux FIGS.1A et 1B, de préférence, les parties 2A, 2B et 4A, 4B du cadre intercalaire en matériau conducteur sont disposées sur les bords des parois supérieures et inférieures substantiellement sur toute la longueur ou la largeur de ces parois.

En référence aux FIGS.1A et 1C, les parties isolantes 3A, 3B et 5A, 5B sont alors disposées le long des autres bords de ces parois.

Les parties 2A, 2B, 4A, 4B du cadre intercalaire en matériau conducteur, forment au moins sur une partie de leur surface externe 9B des zones de contacts externes pour l'accumulateur plat. A cet effet, il est avantageux que lesdites surfaces externes 9B s'étendent au-delà de la périphérie des première et seconde feuilles de recouvrement 1, 8, sur une dimension D. Cette dimension D peut être de toute valeur appropriée à faire que ces parties de cadre constituent des contacts électriques francs améliorés. Mais aussi, cette distance D peut être telle que ces parties de cadre, qui sont en saillie vis-à-vis de la périphérie des feuilles de recouvrement, constituent des protubérances qui forment des moyens de coulissement de l'accumulateur plat dans des glissières, ou bien simplement des moyens de calage de l'accumulateur plat dans un logement. Egalement les surfaces externes 9C des parties de cadre isolantes peuvent former des protubérances de dimension D' par rapport à la périphérie des première et seconde feuilles de recouvrement. D'une manière générale, une ou des parties du cadre 9 peut ou peuvent déborder de la périphérie d'une ou des deux feuilles de recouvrement.

En référence aux FIGS.1A, 1B, 1C, 1D et à la FIG.3A, le cadre intercalaire est en deux parties. Une première partie 2A, 3A, 4A, 5A de ce cadre intercalaire est attachée de façon étanche à la paroi inférieure 1 formant une partie inférieure de la carte mince ; et une deuxième partie 2B, 3B, 4B, 5B du cadre intercalaire est attachée de façon étanche à la paroi supérieure 8 formant une partie supérieure de la carte mince.

Pour le montage de la carte mince, la cellule électrochimique 100 est disposée dans l'évidement 9A de la partie inférieure de la carte mince. Les électrodes 26 et 28 de cette cellule électrochimique 100 sont fixées respectivement sur les parties conductrices 4A, 2A de la première partie du cadre intercalaire par toute méthode de fixation étanche compatible avec les matériaux des parties conductrices 4A, 2A et des électrodes 26, 28. La partie supérieure de la carte mince est placée avec la paroi supérieure 8 en haut, et avec la seconde partie 2B, 3B, 4B, 5B du cadre intercalaire en vis-à-vis de la première partie 2A, 3A, 4A, 5A du cadre intercalaire ; dans cet arrangement les parties en matériau conducteur 2A, 4A de la première partie du cadre intercalaire 9 et de la seconde partie 2B, 4B du cadre intercalaire 9 sont placées en vis-à-vis, ainsi, les parties en matériau isolant des deux parties du cadre intercalaire se trouvent également en vis-à-vis. Les deux parties de cadre intercalaire sont alors fixées entre elles de façon étanche.

Le matériau conducteur du cadre intercalaire doit être compatible avec le métal des électrodes de l'élément électrochimique. Par compatible, on entend que ce matériau ne doit pas provoquer de réactions chimiques secondaires quand il est connecté électriquement au matériau d'électrode. Ces parties en matériau conducteur du cadre intercalaire sont susceptibles de former des collecteurs de courant respectivement d'anode et de cathode. Lorsque le matériau conducteur du cadre est un matériau différent de celui des électrodes, les problèmes d'incompatibilité avec le métal des électrodes sont évités par la réalisation d'un revêtement plastique isolant positionné en 10 sur les parties conductrices 2A, 2B, 4A, 4B du cadre en regard de la cavité 9A recevant la cellules électrochimique.

Le matériau conducteur du cadre peut être un métal tel que l'acier, par exemple revêtu d'une couche plastique sur sa face interne en 10, ou d'un plastique conducteur isolant du côté 10 de la cavité contenant la cellule électrochimique.

Le matériau isolant 3A, 3B, 5A, 5B du cadre peut être un plastique thermosoudable, ou un plastique thermodurcissable. Ces plastiques présentent la propriété de pouvoir être scellé sur d'autres plastiques et sur des métaux. D'autres matériaux isolants peuvent être choisis : les polyéthylènes, polypropylènes, les copolymères d'éthylène, et les acides acryliques et méthacryliques. Le matériau isolant du cadre peut aussi être formé d'un joint en polysiloxane (silicone).

Le scellement des matériaux plastiques les uns sur les autres ou sur les métaux est bien connu de l'homme du métier par la publication de connaissance générale : "Plastic Engineering Hand Book, Society of Plastics Industry Incorporated, third Edition, Reinhold Book Corporation, New-York, USA".

Certains plastiques possèdent la propriété d'être scellables à chaud à des surfaces métalliques sans utiliser d'adhésif ou sans nécessiter de traitement préliminaire autre qu'un nettoyage. Dans certains cas un prétraitement du métal est nécessaire. D'autres matériaux isolants pour réaliser le cadre intercalaire nécessitent un adhésif pour sceller le plastique sur le métal. Parmi les adhésifs pour sceller les plastiques entre eux ou au métal, des résines époxy ou des colles acryliques sont disponibles. Dans ce cas la résine époxy peut aussi servir pour réaliser la couche isolante entre le matériau conducteur du cadre et la cavité contenant la cellule électrochimique.

Les plastiques peuvent être extrudés en un film qui peut être ensuite laminé. Les parties du cadre intercalaire sont perforées à partir d'une feuille de film plastique avec une étampe dont la forme dépend de la forme désirée pour l'élément accumulateur. Les parties métalliques du cadre sont également disponibles en diverses épaisseurs sous forme de ruban plat et peuvent être découpées de la même manière que les films plastiques. Un ruban métallique doit être nettoyé et dégraissé avant de pouvoir être utilisé pour le montage du cadre intercalaire de la carte mince. D'une manière générale, l'épaisseur des éléments du cadre intercalaire dépend de l'épaisseur de l'élément accumulateur disposé dans l'évidement de ce cadre intercalaire.

En référence aux FIGS.1A, 1B, 1C et 1D et à la FIG.3B, le cadre intercalaire 9 ne comprend qu'une seule partie formée des parties en matériau conducteur 2A, 4A et des parties en matériau isolant 3A, 5A fixées de façon étanche sur la paroi inférieure 1. La hauteur du cadre intercalaire est appropriée à former un évidement 9A convenable pour recevoir un élément accumulateur plat 100. Lorsque l'élément accumulateur plat 100 a été mis en place dans cet évidement 9A avec ses électrodes 26, 28 fixées aux parties conductrices 4A, 2A du cadre intercalaire, alors une simple paroi supérieure 8 telle que représentée sur la FIG.1D vient fermer de façon étanche la carte mince ainsi formée. Les parties conductrices 4A, 2A du cadre 9 peuvent être revêtues d'une couche isolante positionnée en 10, en vis-à-vis de l'évidement 9A, comme déjà décrit en référence à la FIG.3A.

Des produits pour fabriquer des éléments accumulateurs sont bien connus de l'homme du métier par la publication de connaissances générales : "Handbook of Batteries, 2nd Edition, David Lindon". Par ce document l'homme du métier sait bien que les batterie plomb-acide possèdent de grandes qualités de puissance et de rechargeabilité, c'est-à-dire que ce type de batterie est rechargeable et que la charge est stable pendant une durée de temps convenable.

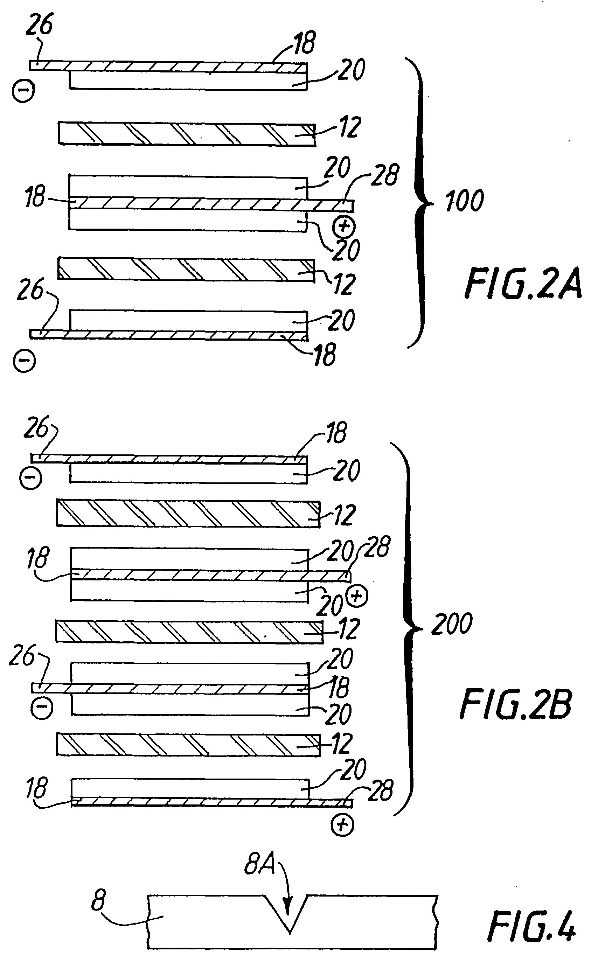

En référence à la FIG.2A, une cellule électrochimique du type plomb-acide susceptible de réaliser un élément accumulateur plat comprend : des films 18 ultra-minces d'un métal actif électrochimiquement, généralement du plomb ou du nickel, un revêtement desdits films de métal actif sur une face ou sur deux faces avec une pâte électrochimiquement active 20, un matériau séparateur agissant pour absorber un électrolyte qui est contenu dans le système scellé formé par la carte mince qui enclôt la cellule électrochimique.

L'association des films de métal actif 18 avec le revêtement de pâte active 20 forme des plaques de polarité négative ou positive qui sont séparées l'une de l'autre par le matériau séparateur 12.

Une extrémité 26 et 28 des films 18 n'est pas revêtue de pâte active 20 de manière à permettre de réaliser des contacts électriques. Le séparateur 12 s'étend au-delà des parties revêtues de pâte de chacune des plaques positives et négatives. Les plaques positives et négatives sont disposées de telle sorte que les parties non revêtues pour former des contacts sont alternées.

Sur la FIG.2A, une plaque positive est formée d'une couche métallique 18, d'une zone de contact 26 et est revêtue de pâte 20 sur une seule face. Cette première électrode négative est séparée d'une électrode positive par le séparateur 12. L'électrode positive comprend un film mince métallique 18, un contact 28 et est revêtue sur ses deux faces de la pâte 20. Cette électrode positive, de contact 28, est séparée de l'électrode négative suivante par un séparateur 12. L'électrode négative suivante est constituée d'un film métallique 18, de contact 26, et d'une pâte 20 tournée vers le séparateur 12. Une telle cellule 100 comprend donc deux plaques négatives et une plaque positive commune formant ainsi deux cellules élémentaires disposées substantiellement parallèlement et ayant une électrode commune.

En référence à la FIG.2B, une cellule électrochimique 200 comprend une plaque négative supérieure dont la face tournée vers l'intérieure de la cellule électrochimique est revêtue de pâte active 20, un séparateur 12, une plaque positive dont les deux faces sont revêtues de pâte, un séparateur, une plaque négative dont les deux faces sont revêtues de pâte, un séparateur et une plaque positive dont une seule face est revêtue de pâte, formant ainsi trois cellules élémentaires, disposées substantiellement parallèlement, et ayant deux fois une électrode de même polarité commune.

Dans un système plomb-acide, le film 18 est de préférence composé de plomb pur à 99,99 %. Pour une cellule électrochimique plomb-acide, il existe un grand nombre de compositions de pâtes actives possibles déjà connues de l'état de la technique. Par exemple, des pâtes au PbO et Pb₃O₄ peuvent être utilisées pour les plaques positives, et des pâtes au PbO peuvent être utilisées pour des plaques négatives. Le séparateur peut être en fibres de verre très absorbantes. L'électrolyte est de l'acide sulfurique. La concentration en électrolyte dans la cellule est établie en ajoutant de l'électrolyte en excès. Un système d'évent doit être prévu dans la cellule pour éliminer les gaz en excès quand la pression interne excède un certain niveau. Dans la cellule électrochimique plomb-acide, l'électrolyte est dans un état pratiquement saturé et une certaine pression interne supérieure à la pression atmosphérique doit être maintenue dans l'état opérationnel normal de la cellule. Une cellule électrochimique du type représenté sur les FIG.2A et 2B est maintenue dans la carte mince de telle manière que le volume compris entre le séparateur compressé et le matériau actif est substantiellement rempli et qu'il n'y a pas d'électrolyte libre présent.

Ces cellules électrochimiques présentent l'avantage d'avoir des possibilités d'un nombre de cycles de charge et décharge très grand. Ces cellules peuvent être rechargées à un taux élevé comparé à d'autres cellules connues.

La FIG.3A représente en coupe une cellule électrochimique 100 de la FIG.2A montée dans une carte mince dont le cadre intercalaire est en deux parties.

La FIG.3B montre une cellule 100 de la FIG.2A montée dans une carte mince dont le cadre intercalaire 2A,4A est en une seule partie.

Dans des exemples de réalisation de cellules électrochimiques, les dimensions des zones actives des électrodes étaient environ de 44 mm sur 57 mm ; l'épaisseur de la plaque positive à deux couches était de 0,254 mm ; l'épaisseur des plaques négatives ou positives à une couche était de 0,152 mm ; l'épaisseur du séparateur comprimé sous 55gr par m² était de 0,191 mm. Ceci conduit à une cellule 100 d'épaisseur environ 1 mm et à une cellule 200 d'environ 1,3 mm. Chacune de ces cellules plomb-acide est capable de travailler sous une tension de 2V.

Pour obtenir un fonctionnement par exemple sous 6V, on peut associer en série plusieurs structures fondées sur la structure de la carte mince précédente.

Un tel système est représenté sur la FIG.3C. Ce système comprend : des parois 1, 6, 7, 8 du type des parois inférieure et supérieure décrites précédemment et des cadres intercalaires 9 disposés entre ces parois avec des évidements 9A recevant chacun une cellule électrochimique respectivement 100A, 100B, 100C. Ces structures sont associées et fixées de manière étanche comme il a été décrit précédemment. Les parois intermédiaires 6 et 7 peuvent être plus minces que les parois inférieure et supérieure 1 et 8 et être réalisées en un matériau isolant de nature différente. Une condition essentielle de construction de cette structure à plusieurs cellules est l'étanchéité entre les cellules électrochimiques.

Dans la forme de réalisation de la FIG.3C, une batterie de 6V est obtenue en empilant les trois structures de manière que la sortie positive de la deuxième, ou structure intermédiaire 100B soit en vis-à-vis des sorties négatives de la première structure 100A et de la troisième structure 100C. Il en résulte que la sortie négative de cette deuxième structure 100B est en vis-à-vis de la sortie positive de la première structure 100A et de la troisième structure 100C. Il est alors aisé de connecter ces trois structures électriquement en série comme connu de l'homme du métier, par exemple en connectant la borne + de la première structure 100A avec la borne - de la deuxième structure 100B, puis en connectant la borne + de la deuxième structure 100B avec la borne - de la troisième structure 100C.

D'autres liaisons entre ces structures peuvent être réalisées suivant le but recherché, pour obtenir une connexion en parallèle par exemple.

En référence à la FIG.3D, les feuilles intermédiaires 6 et 7 peuvent présenter des ouvertures 6A et 7A coïncidant avec les cadres intercalaires en vis-à-vis pour mettre les parties métalliques des cadres intercalaires 9 des différentes structures en contact, ces ouvertures étant emplies de matériau conducteur, métal ou plastique conducteur, formant des petits plots conducteurs 6B et 7B, pour établir le contact électrique d'un cadre intercalaire inférieure au cadre intercalaire supérieur. Cet agencement de plots conducteurs 6B, 7B est réalisé lors de l'empilement des structures lorsque les ouvertures 6A, 7A ont été préalablement prévues dans les feuilles 6 et 7. Cet agencement doit être fait en veillant à ne pas détériorer l'étanchéité de la carte vis-à-vis des cellules électrochimiques.

Dans un mode de réalisation non représenté, la liaison électrique peut être faite par une couche conductrice externe ou un conducteur externe reliant des parties externes 9B des cadres intercalaires qui doivent être connectées électriquement. Les autres parties peuvent être protégées par une couche isolante ou plastique.

En référence à la FIG.4, dans l'exemple de réalisation où la carte mince inclut un élément accumulateur plomb-acide, des moyens de sécurité doivent être prévus du fait que l'élément électrochimique est normalement sous une pression supérieure à la pression atmosphérique. Ces moyens de sécurité permettent de s'affranchir d'une occasionnelle possibilité d'explosion. Dans un mode de réalisation, ces moyens consistent à réaliser une ou plusieurs rainures 1A, 8A creusées dans les parois supérieure 8 ou inférieure 1 de la carte mince. Ainsi, dans le cas où la carte serait soumise à une surpression, la carte pourrait gonfler et faire s'ouvrir une telle rainure sans exploser, même si les parois inférieures et supérieures de la carte sont par ailleurs suffisamment épaisses pour être semi-rigides.

Dans un autre mode de réalisation d'un système de sécurité, un évent peut être réalisé par une ouverture de très petite dimension positionnée à l'emplacement d'un scellement entre deux parties de la carte mince.

## Revendications

1. Carte mince incluant un accumulateur électrique plat et des moyens de contact comprenant :
une première et une seconde feuilles de recouvrement,
un cadre intercalaire attaché de façon étanche auxdites feuilles de recouvrement à leur périphérie, ledit cadre ayant un évidement central, un élément accumulateur plat disposé dans l'évidement central du cadre, ayant des électrodes de polarités opposées,
carte mince dans laquelle :
la première et la seconde feuille de recouvrement sont en matériau plastique isolant,
le cadre intercalaire comprend des parties en matériau conducteur respectivement connectées aux électrodes de polarité opposées, et respectivement isolées entre elles par des parties dudit cadre intercalaire en matériau isolant auxquelles elles sont scellées.

2. Carte mince selon la revendication 1, dans laquelle une ou des parties du cadre intercalaire forment une ou des protubérances vis-à-vis de la périphérie d'une ou des feuille(s) de recouvrement.

3. Carte mince selon l'une des revendications 1 ou 2, dans laquelle les parties du cadre intercalaire en matériau conducteur sont disposées substantiellement sur toute la largeur ou substantiellement sur toute la longueur des feuilles de recouvrement de la carte.

4. Carte mince selon la revendication 3, dans laquelle le cadre intercalaire comprend deux cadres minces attachés ensemble.

5. Carte mince selon la revendication 4, dans laquelle un des cadres minces est attaché de façon étanche à ladite première feuille de recouvrement et l'autre cadre mince est attaché de façon étanche à ladite seconde feuille de recouvrement.

6. Carte mince selon l'une des revendications 1 à 5, dans laquelle l'accumulateur électrique est formé d'une cellule électrochimique incluant deux électrodes planes ultraminces.

7. Carte mince selon l'une des revendications 1 ou 5, comprenant au moins deux éléments accumulateurs électriques disposées substantiellement parallèlement dans l'évidement du cadre et ayant une électrode de même polarité commune.

8. Carte mince selon la revendication 7, dans laquelle des éléments accumulateurs plats sont séparés de façon étanche par une feuille isolante attachée à chacun des cadres intercalaires à leurs surface en vis-à-vis, de manière à en isoler aussi électriquement les parties conductrices des cadres en vis-à-vis.

9. Carte mince selon la revendication 8, dans laquelle les électrodes de polarités opposées des éléments accumulateurs plats sont scellées aux parties en matériau conducteur des cadres intercalaires en vis-à-vis et dans laquelle deux parties en matériau conducteur en vis-à-vis de cadres intercalaires correspondant à deux éléments accumulateurs adjacents sont reliées électriquement pour connecter les deux éléments accumulateurs en série.

10. Carte mince selon l'une des revendications précédentes, dans laquelle le ou les élément(s) accumulateur(s) est (sont) du type rechargeable.

11. Carte mince selon la revendication 10, dans laquelle le ou les élément(s) accumulateur(s) est (sont) du type plomb-acide.

12. Carte mince selon la revendication 11, dans laquelle une des plaques de recouvrement comprend un amincissement local pour servir de sécurité.

13. Carte mince selon la revendication 11, comprenant un évent positionné à l'emplacement d'un scellement entre deux parties de ladite carte mince.
